# EUROPÄISCHE PATENTSCHRIFT

(11) **EP 3 892 392 B1**
(45) Veröffentlichungstag und Bekanntmachung des Hinweises auf die Patenterteilung: **28.08.2024**
(21) Anmeldenummer: 21164939.7
(22) Anmeldetag: 25.03.2021
(51) Int. Cl.: B08B 5/02, G01V 8/10

(54) **ANLAGE ZUM BE- ODER VERARBEITEN ODER TRANSPORTIEREN VON PRODUKTEN**
INSTALLATION FOR PROCESSING OR TRANSPORTING PRODUCTS
INSTALLATION DE TRAITEMENT OU DE TRANSFORMATION OU DE TRANSPORT DES PRODUITS

(30) Priorität: 27.03.2020 DE 102020108570
(43) Veröffentlichungstag der Anmeldung: 13.10.2021
(73) Patentinhaber: MINDA Industrieanlagen GmbH, 32423 Minden (DE)
(72) Erfinder: Albers, Thomas, 32423 Minden (DE)
(74) Vertreter: Gramm, Lins & Partner Patent- und Rechtsanwälte PartGmbB

(56) Entgegenhaltungen:
- WO-A1-2015/122793
- WO-A1-2015/122973
- DE-A1- 102018 117 709
- US-A1- 2014 320 634
- US-A1- 2019 275 991

## Beschreibung

Die Erfindung betrifft eine Anlage zum Be- oder Verarbeiten oder Transportieren von Produkten unter Verwendung von Materialien aus Holzwerkstoff, Pappe oder Kunststoff, die zumindest aus einer Maschine und einem der Maschine zugeordneten Sensor besteht, der eine im Wesentlichen in einer vertikalen Richtung orientierten Detektionsfläche aufweist, die während des Be- oder Verarbeitungsprozesses einer Verschmutzung unterliegt, und eine mit Druckluft arbeitende Abblasvorrichtung mit einem Überdruckbehälter und einer Abblasdüse aufweist, wobei der Überdruckbehälter über eine erste Leitung mit der Abblasdüse in Verbindung steht.

Eine solche Anlage ist beispielsweise aus der US 2014/320634 A1, welche eine Anlage gemäß dem Oberbegriff des Anspruchs 1 offenbart, bekannt.

Die DE 10 2018 117 709 A beschreibt ein Reinigungssystem mit einer Pumpe, einer Luftkammer und einer Düse, mit der die Rückfahrkamera eines Fahrzeuges mit Luft oder Reinigungsflüssigkeit abgesprüht werden kann. Die Rückfahrkamera des Fahrzeuges ist im Wesentlichen in einer horizontalen Richtung ausgerichtet, um das Umfeld hinter dem Fahrzeug zu erfassen.

Die WO 2015/122973 A1 beschreibt Inspektionsobjektive, die in Anlagen mit geschlossenen Prozessräumen eingesetzt werden, die eine Überwachung erfordern und eine stark partikelbeladene Atmosphäre umfassen, insbesondere eine Hochtemperaturatmosphäre, wie sie beispielsweise bei Rückgewinnungskesseln, Stahlherstellungsanlagen, Brennöfen und dergleichen entsteht. Um die Kameraoptik vor Hitze und Partikelverschmutzung zu schützen, wird ein Luftstrom um die Linse herum bereitgestellt, um diese zu kühlen und ein Festsetzen der Partikel auf ihr zu verhindern. Zur Verbesserung der Umströmung wird eine Umkehrdüse bereitgestellt, die den Spülstrom umlenkt und eine Rückströmung erzeugt, die innerhalb der Linsenspitze konvergiert und dadurch einen starken Axialstrahl erzeugt, der verhindert, dass Partikel in den Bereich um die Linsenoptik eindringen.

Die Überwachung von Produktionsanlagen erfolgt in der Regel auch mittels Sensoren, die beispielsweise die Orientierung der Produkte oder den Produktionsfortschritt in einer Verarbeitungskette überwachen. Diese Sensoren können beispielsweise optisch oder induktiv arbeiten. Insbesondere, wenn sie in einer vertikalen Richtung (Detektionsrichtung) ausgerichtet sind und beispielsweise Teil einer Lichtschranke sind, unterliegt die in einer horizontalen Ebene liegende Detektionsfläche im Produktionsprozess einer Verschmutzung. Insbesondere, wenn bei der Be- oder Verarbeitung bzw. dem Transport ein erhöhter Staubanfall auftritt, wie dies beispielsweise in der holz- oder papierverarbeitenden Industrie der Fall ist, müssen die Detektionsflächen der Sensoren regelmäßig gereinigt werden. Dies ist aufwändig und muss manuell von einer Bedienperson mittels geeigneter Werkzeuge durchgeführt werden. Ist der Verschmutzungsgrad der Detektionsfläche zu hoch, fällt der Sensor aus, was dazu führen kann, dass die Produktionsanlage stillsteht. Da für den Maschinenführer nicht sofort erkennbar ist, warum der Stillstand eingetreten ist, muss Wartungspersonal angefordert werden, das die Fehlerursache suchen und beheben muss. Dabei sind nicht unerhebliche Stillstandszeiten nicht auszuschließen, was die Produktionskosten erhöht.

Sinnvoll ist es deshalb, eine regelmäßige und möglichst selbsttätige Reinigung der Sensoren bereitzustellen. Denkbar ist es, den Staub mittels Pressluft abzublasen. Die Installation eines entsprechenden Leitungssystems und die Bereitstellung von Pressluft wird von den Betreibern der Anlage in der Regel nicht akzeptiert, weil zusätzlicher Wartungsaufwand notwendig ist und Anlagen vielfach hydraulisch bzw. elektrisch und nicht pneumatisch betrieben werden. Darüber hinaus besteht die Gefahr der Verschmutzung der Sensoroberfläche bei Nutzung von Standard-Druckluft durch Ölanteile in der Druckluft.

Hiervon ausgehend soll die eingangs beschriebene Anlage so verbessert werden, dass eine regelmäßige und selbsttätige Reinigung der Sensoren zumindest mit in einer vertikalen Richtung orientierten Detektionsfläche gereinigt werden können.

Zur Problemlösung zeichnet sich eine gattungsgemäße Anlage dadurch aus, dass eine Mehrzahl von Sensoren (10) vorgesehen und jedem Sensor (10) in seiner unmittelbaren Nähe eine eigene Abblasvorrichtung (23) zugeordnet ist, die als separate Baueinheit außerdem einen Drucklufterzeuger und ein Schaltventil aufweist und der Drucklufterzeuger über eine zweite Leitung mit dem Überdruckbehälter in Verbindung steht.

Durch diese Ausgestaltung wird ein autark arbeitendes System geschaffen, das aus einem Sensor und der Reinigungsanlage besteht. Dadurch kann die Abblasvorrichtung in unmittelbarer Nähe zum Sensor angeordnet werden und eine separate Baueinheit sein. Der Drucklufterzeuger kann eine kleine Kolbenpumpe oder ein Mini-Kompressor sein, mittels denen pro Arbeitszyklus jeweils nur eine geringe Menge Druckluft in den Überdruckbehälter eingespeist wird.

Das Schaltventil kann elektrisch ansteuerbar ausgeführt sein. Das Schaltventil ist vorzugsweise ein 3/2-Wege-Ventil oder ein 3/3-Wege-Ventil. Es kann bevorzugt zeitgesteuert oder druckgesteuert angetrieben werden. Bei einem zeitgesteuerten Betrieb wird in regelmäßigen Intervallen das Ventil geöffnet und die im Überdruckbehälter gespeicherte Druckluft an die Abblasdüse geleitet, mittels der dann die Detektionsfläche abgeblasen wird. Bei einem druckgesteuerten Betrieb schaltet das Schaltventil dann, wenn im Überdruckbehälter ein voreingestellter Druck erreicht wird. Grundsätzlich können Zeit- und Drucksteuerung auch gemeinsam angewendet werden. Die Drucksteuerung sorgt dafür, dass der Drucklufterzeuger den Druck erzeugt, bis der Soll-Druck erzeugt ist, die Zeitsteuerung sorgt dafür, dass in festen Abständen (z.B. einmal täglich) die Reinigung durchgeführt wird. Eine weitere Möglichkeit der Ansteuerung des Schaltventils kann durch ein externes Signal erfolgen, das z.B. von dem zu reinigenden Sensor durch Selbstdiagnose initiiert wird.

Vorzugsweise wird der Drucklufterzeuger permanent betrieben. Der permanente Betrieb hat den Vorteil, dass der Drucklufterzeuger möglichst klein ausgewählt werden kann, um wenig Bauraum in Anspruch zu nehmen, wobei natürlich darauf zu achten ist, dass innerhalb eines vernünftig gewählten Zeitraums der Überdruckbehälter auch entsprechend befüllt wird, um die Funktionsfähigkeit der Abblasvorrichtung sicherzustellen. Bei dieser Ausführungsform kann das Schaltventil rein mechanisch ausgebildet sein und so ausgewählt werden, dass es ab einem bestimmten Druck öffnet und die Abblasvorrichtung wirksam wird. Danach schließt es wieder und es erfolgt ein erneuter Druckaufbau. Selbstverständlich ist aber auch ein Intervallbetrieb möglich.

Dadurch, dass die Abblasvorrichtung eine separate Baueinheit ist, die jedem Sensor zugeordnet werden kann, ist ein sehr einfacher Aufbau der Anlage möglich. Fällt eine Abblasvorrichtung aus, kann sie leicht ersetzt werden. Kleine Kolbenpumpen bzw. Mini-Kompressoren sind preiswert zu beschaffen. Der Druckluftbehälter benötigt kein großes Volumen, um eine ausreichende Leistungsfähigkeit der Abblasvorrichtung bereitzustellen. Kurze Druckluftstöße sind völlig ausreichend, auf der Detektionsfläche liegenden Staub abzublasen. Die Abblasvorrichtung ist sehr flexibel verwendbar und kann grundsätzlich für alle Industriezweige verwendet werden, in denen Sensoren zur Überwachung von Anlagen eingesetzt werden.

Mit Hilfe einer Zeichnung soll ein Ausführungsbeispiel der Erfindung nachfolgend beschrieben werden:
Es zeigen:

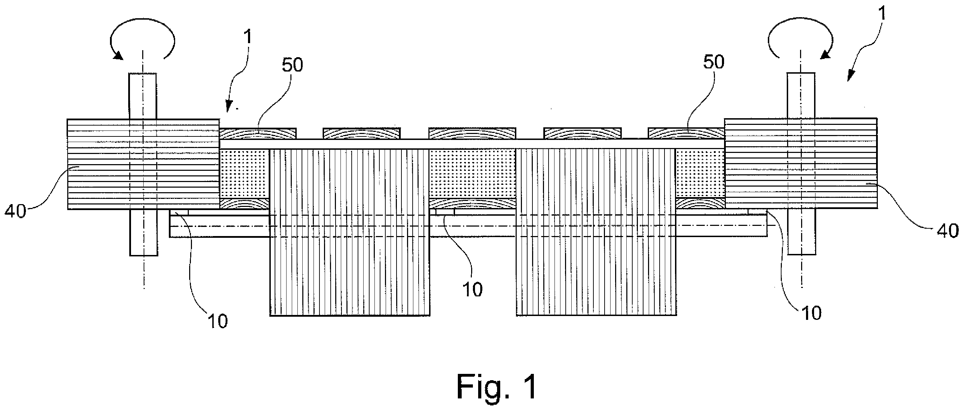

- Figur 1 -: die schematische Darstellung einer Anlage zum Reinigen einer Transport- oder Lagerpalette;

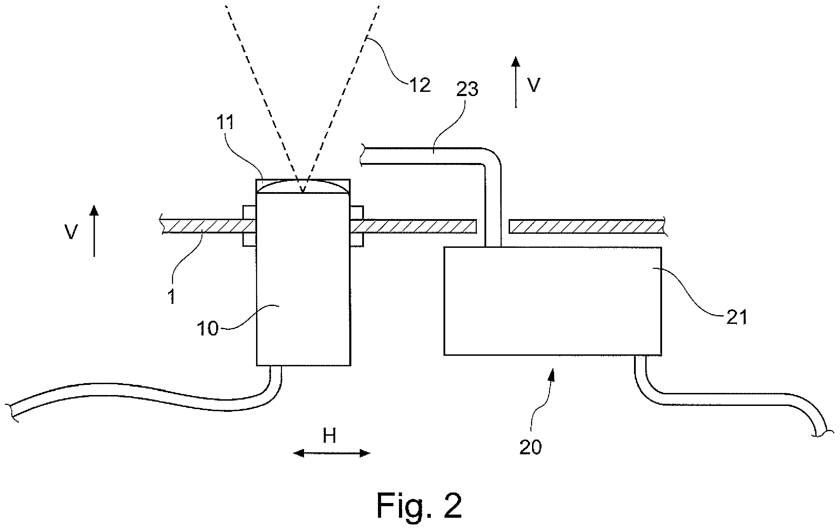

- Figur 2 -: den Gesamtaufbau der Abblasvorrichtung und des Sensors in schematischer Darstellung;

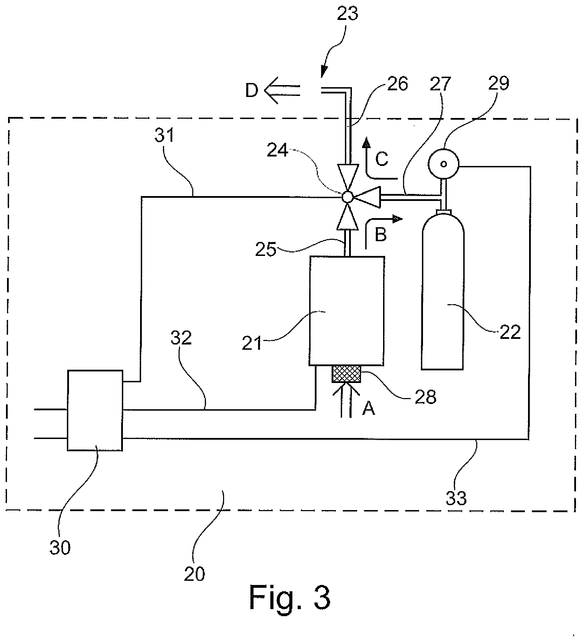

- Figur 3 -: eine schematische Detaildarstellung der Abblasvorrichtung.

Die erfindungsgemäße Anlage zum Be- oder Verarbeiten oder Transportieren von Produkten soll nachfolgend anhand einer Anlage zum Reinigen einer Transport- oder Lagerpalette erläutert werden. Grundsätzlich ist die Erfindung aber in allen Anlagen oder Maschinen verwendbar, die mittels Sensoren 10 bzw. Lichtschranken überwacht werden. In der Anlage sind mehrere Maschinen 1 in einer Transportrichtung hintereinander vorgesehen, um über rotierende Bürsten 40 einzelne Paletten 50 zu reinigen.

An den Maschinen 1 sind eine Mehrzahl von Sensoren 10 vorgesehen. Die Sensoren 10 weisen eine im Wesentlichen in einer vertikalen Richtung V orientierte Detektionsfläche 11 auf. Über die Detektionsfläche 11 sendet der Sensor 10 in vertikaler Richtung Licht- und Ultraschallwellen 12, und die Detektionsfläche 11 erstreckt sich im Wesentlichen in einer horizontalen Ebene H, wodurch sich Stäube leicht festsetzen und eine stetig wachsende Schicht ausbilden können. In unmittelbarer Nähe zum Sensor 10 ist die Abblasvorrichtung 20 angeordnet, die aus einem Drucklufterzeuger 21, einem Überdruckbehälter 22, einer Abblasdüse 23 und einem elektrisch ansteuerbaren 3/2-Wege-Ventil 24 besteht. Selbstverständlich kann das Schaltventil 24 auch ein 3/3-Wege-Ventil sein. Der Drucklufterzeuger 21 kann eine kleine Kolbenpumpe oder ein Mini-Kompressor sein. Über eine erste Leitung 26 steht der Druckluftbehälter 22 mit der Abblasdüse 23 in Verbindung. Über eine zweite Leitung 25 steht der Drucklufterzeuger 21 mit dem Überdruckbehälter 22 in Verbindung. Die Leitungen 25, 26 sind mit dem Schaltventil 24 verbunden. Der Druckluftbehälter 22 ist über eine dritte Leitung 27 an das Schaltventil 24 angebunden. Je nach Schaltstellung des Schaltventils 24 wird vom Drucklufterzeuger 21 Druckluft in den Überdruckbehälter 22 gepumpt oder Druckluft aus dem Überdruckbehälter 22 und die Leitungen 26, 27 an die Abblasdüse 23 geleitet, über die die Detektionsfläche 11 angeblasen wird, um sie von Stäuben zu befreien. Dem Drucklufterzeuger 21 zugeordnet ist ein Luftfilter 28, über den die angesaugte Luft gereinigt wird. Der Überdruckbehälter 22 ist mit einem Manometer 29 versehen, das den Überdruck im Druckluftbehälter 22 visualisiert. Die Abblasdüse 23 ist so ausgerichtet, dass die Detektionsfläche 11 des Sensors 10 vollständig von einem Druckluftstoß überstrichen wird.

Das Schaltventil 24 ist elektrisch angesteuert und mit einer Steuereinheit 30 verbunden. Diese Steuereinheit 30 steuert über die Steuerleitung 31 das Schaltventil 24, über eine Steuerleitung 32 den Drucklufterzeuger 21. Das Manometer 29 ist über eine Signalleitung 33 ebenfalls mit der Steuereinheit 30 verbunden. Wird ein voreingestellter Druck im Überdruckbehälter 22 erreicht, wird von der Steuereinheit 30 ein Schaltsignal an das Schaltventil 24 gegeben, um dieses zu öffnen, sodass Druckluft aus dem Druckluftbehälter 22 zur Düse 23 gelangt.

Es ist auch möglich, das Schaltventil 24 zeitgesteuert zu betreiben und in regelmäßigen Zeitintervallen so zu öffnen, dass Druckluft aus dem Druckluftbehälter 22 abgegeben wird. Die Abblasvorrichtung 20 ist ein eigenes Bauteil, das in einem eigenen Gehäuse (hier nicht dargestellt) untergebracht ist und in beliebiger Lage, aber möglichst dicht am Sensor 10 innerhalb der Anlage installiert werden kann. Jedem Sensor 10 ist eine eigene Abblasvorrichtung 20 zugeordnet. Die Ansaugluft wird mit dem Pfeil A dargestellt, der Druckaufbau vom Drucklufterzeuger 21 in den Überdruckbehälter 22 ist mittels des Richtungspfeiles B angegeben, der Druckluftabbau wird durch den Richtungspfeil C wiedergegeben und die Sensorreinigung deutet der Richtungspfeil D an.

Wenn für das Schaltventil 24 ein 3/3-Wege-Ventil verwendet wird, erfolgt der Druckaufbau im Druckluftbehälter 22 in der ersten Ventilstellung, in der zweiten Ventilstellung wird der Druck im Druckluftbehälter 22 gehalten, weil der Solldruck erreicht und der Drucklufterzeuger 21 abgeschaltet ist, und in der dritten Ventilstellung wird der Druckluftbehälter 22 zum Reinigen des Sensors 10 entleert.

### Bezugszeichenliste

- 1: Maschine
- 10: Sensor
- 11: Detektionsfläche
- 12: Licht- und Ultraschallwellen
- 20: Abblasvorrichtung
- 21: Drucklufterzeuger
- 22: Überdruckbehälter / Druckluftbehälter
- 23: Abblasdüse
- 24: Schaltventil
- 25: zweite Leitung
- 26: erste Leitung
- 27: dritte Leitung
- 28: Luftfilter
- 29: Manometer
- 30: Steuereinheit
- 33: Signalleitung
- 40: Bürste
- 50: Palette

- H: horizontale Ebene
- V: vertikale Richtung

- Pfeil A: Ansaugluft
- Pfeil B: Druckaufbau
- Pfeil C: Druckluftabbau
- Pfeil D: Sensorreinigung

## Patentansprüche

1. Anlage zum Be- oder Verarbeiten oder Transportieren von Produkten unter Verwendung von Materialien aus Holzwerkstoff, Pappe oder Kunststoff, zumindest bestehend aus:
a) einer Maschine (1),
b) einem der Maschine (1) zugeordneten Sensor (10), der
b₁) eine im Wesentlichen in einer vertikalen Richtung (V) orientierte Detektionsfläche (11) aufweist,
b₂) während des Be- oder Verarbeitungsprozesses einer Verschmutzung der Detektionsfläche (11) unterliegt,
b₃) eine mit Druckluft arbeitende Abblasvorrichtung (20) mit einem Überdruckbehälter (22) und einer Abblasdüse (23) aufweist, wobei
b₄) der Überdruckbehälter (22) über eine erste Leitung (26) mit der Abblasdüse (23) in Verbindung steht,
**dadurch gekennzeichnet, dass**
eine Mehrzahl von Sensoren (10) vorgesehen und jedem Sensor (10) in seiner unmittelbaren Nähe eine eigene Abblasvorrichtung (23) zugeordnet ist, die als separate Baueinheit außerdem einen Drucklufterzeuger (21) und ein Schaltventil (24) aufweist, und der Drucklufterzeuger (21) über eine zweite Leitung (25) mit dem Überdruckbehälter (22) in Verbindung steht.

2. Anlage nach Anspruch 1, **dadurch gekennzeichnet, dass** das Schaltventil (24) elektrisch ansteuerbar ist.

3. Anlage nach einem der vorstehenden Ansprüche, **dadurch gekennzeichnet, dass** der Drucklufterzeuger (21) eine Kolbenpumpe ist.

4. Anlage nach einem der Ansprüche 1 oder 2, **dadurch gekennzeichnet, dass** der Drucklufterzeuger (21) ein Kompressor ist.

5. Anlage nach einem der vorstehenden Ansprüche, **dadurch gekennzeichnet, dass** das Schaltventil (24) ein 3/2-Wege-Ventil oder ein 3/3-Wege-Ventil ist.

6. Anlage nach einem der vorstehenden Ansprüche, **dadurch gekennzeichnet, dass** das Schaltventil (24) zeitgesteuert ist.

7. Anlage nach einem der vorstehenden Ansprüche, **dadurch gekennzeichnet, dass** das Schaltventil (24) druckgesteuert ist.

8. Anlage nach einem der vorstehenden Ansprüche, **dadurch gekennzeichnet, dass** der Drucklufterzeuger (21) permanent betrieben ist und den Überdruckbehälter (22) mit Umgebungsluft befüllt.

## Claims

1. A facility for treating or processing or transporting products using materials made of wood composite, paperboard or plastic, said facility comprising at least:
a) one machine (1),
b) at least one sensor (10) assigned to the machine which
b₁) has a detection surface (11) oriented essentially in a vertical direction (V),
b₂) is subject to a contamination of the detection surface (11) during the treatment or processing process,
b₃) a blow-off device (20) operating with compressed air comprising an overpressure container (22) and a blow-off nozzle (23), wherein
b₄) the overpressure container (22) is connected to the blow-off nozzle (23) via a second line (26)
**characterised in that**
a plurality of sensors (10) is provided and
each sensor (10) is assigned its own blow-off device (23) in its immediate vicinity, which also has a compressed air generator (21) and a switching valve (24) as a separate unit, and the compressed air generator (21) is connected via a second line (25) to the overpressure container (22).

2. The facility according to claim 1, **characterised in that** the switching valve (24) can be electrically controlled.

3. The facility according to one of the preceding claims, **characterised in that** the compressed air generator (21) is a piston pump.

4. The facility according to one of the claims 1 or 2, **characterised in that** the compressed air generator (21) is a compressor.

5. The facility according to one of the preceding claims, **characterised in that** the switching valve (24) is a 3/2-way valve or a 3/3-way valve.

6. The facility according to one of the preceding claims, **characterised in that** the switching valve (24) is time-controlled.

7. The facility according to one of the claims 1 to 8, **characterised in that** the switching valve (24) is pressure-controlled.

8. The facility according to one of the preceding claims, **characterised in that** the compressed air generator (21) is operated permanently, and the overpressure container (22) is filled with ambient air.

## Revendications

1. Installation pour traiter ou transformer ou transporter des produits en utilisant des matériaux à base de bois, de carton ou de matière plastique, comprenant au moins :
a) une machine (1),
b) au moins un capteur (10) associé à la machine (1), qui
b₁) présente une surface de détection (11) orientée sensiblement dans une direction verticale (V),
b₂) est soumis à un encrassement de la surface de détection (11) pendant le processus de traitement ou de transformation,
b₃) comprend un dispositif de soufflage (20) fonctionnant à l'air comprimé et présentant un réservoir de surpression (22) et une buse de soufflage (23),
b₄) le réservoir de surpression (22) étant en communication avec la buse de soufflage (23) par l'intermédiaire d'une première conduite (26),
**caractérisée en ce que**
il est prévu une pluralité de capteurs (10), et chaque capteur (10) est associé à son propre dispositif de soufflage (23) situé à proximité immédiate de celui-ci, lequel comprend en outre, en tant qu'unité structurelle séparée, un générateur d'air comprimé (21) et une vanne de commutation (24), et le générateur d'air comprimé (21) est en communication avec le réservoir de surpression (22) par l'intermédiaire d'une deuxième conduite (25).

2. Installation selon la revendication 1,
**caractérisée en ce que** la vanne de commutation (24) peut être commandée électriquement.

3. Installation selon l'une des revendications précédentes,
**caractérisée en ce que** le générateur d'air comprimé (21) est une pompe à piston.

4. Installation selon l'une des revendications 1 ou 2,
**caractérisée en ce que** le générateur d'air comprimé (21) est un compresseur.

5. Installation selon l'une des revendications précédentes,
**caractérisée en ce que** la vanne de commutation (24) est une vanne à 3 voies / 2 positions ou une vanne à 3 voies / 3 positions.

6. Installation selon l'une des revendications précédentes,
**caractérisée en ce que** la vanne de commutation (24) est commandée dans le temps.

7. Installation selon l'une des revendications précédentes,
**caractérisée en ce que** la vanne de commutation (24) est commandée par la pression.

8. Installation selon l'une des revendications précédentes,
**caractérisée en ce que** le générateur d'air comprimé (21) fonctionne en permanence et remplit le réservoir de surpression (22) avec de l'air ambiant.
